# EUROPEAN PATENT APPLICATION

(11) **EP 2 820 945 A1**
(43) Date of publication of application: **07.01.2015**
(21) Application number: 14175740.1
(22) Date of filing: 04.07.2014
(51) Int. Cl.: A01K 61/00, A22C 29/02

(54) **Crab tying device**

(30) Priority: 04.07.2013 HK 13107820
(71) Applicant: FreshLodge Limited, Tsuen Wan, Hong Kong (CN)
(72) Inventor: Law, Nga Wai Joey, Tsuen Wan, Hong Kong (CN)
(74) Representative: Chaillot, Geneviève

(57) **Abstract**

This invention relates to a device for tying crabs and a method of using the same device in which it helps the user to tie the crabs more quickly and efficiently, thus satisfying the safety requirement for food processing and reducing the chance of disputes.

## Description

### FIELD OF INVENTION

This invention relates to a device for tying crabs and a method of using such device.

### BACKGROUND OF INVENTION

Crabs are usually fixed and tied up during transportation, storage, selling and food processing in order to facilitate safe handling and keep the meat of the crab tight. Crabs are commonly tied up by waterweeds or ropes; but since both types of tying means are highly absorbent, it is easy to cause disputes during transaction. Plastic ropes have also been used in tying up the crabs, but harmful and unhealthy substances can be easily released from the plastic products during cooking and food processing.

Multiple cross-tying method is commonly used with the aforesaid types of rope in which more ropes are required. Further, such method is extremely tedious and inefficient which requires at least 3 minutes for tying up a crab and it will take at least half a minute for even an experienced person to complete the tying process. This will largely increase the costs especially in processing a large number of crabs. Besides, since abdomen of the crab is usually covered by the ropes using the above tying method, it would be difficult to have the crab completely cleaned.

Therefore, there is a need to provide an efficient device that can be used for efficiently tying up a crab, fulfilling the safety requirement in food processing, and reducing disputes during transactions.

### SUMMARY OF INVENTION

In the light of the foregoing background, it is an object of the present invention to provide a device for tying crabs and in one aspect, such device is provided in this invention which comprises a tape and a substrate. The width of said tape is about 2-6 cm, and a twistable metal wire is disposed along each side of said tape. Said substrate comprises an internal space with an open front end and an open top in which said internal space is adapted to have sufficient room to accommodate a crab placed therein.

In an exemplary embodiment of the present invention, the device further comprises a fixing unit adjustably disposed within said substrate to adjust the size of said internal space for accommodating crabs with different sizes. In a further exemplary embodiment, said fixing unit comprises two lateral units and a back plate. Said lateral units are of similar height with that of said substrate and of a wedge shape, and said back plate is of equal width with that of said substrate. In an even further embodiment, said fixing unit further comprises a wedge-shaped pad.

In another exemplary embodiment, said tape is made of cotton with thickness of less than 1mm, while the thickness of said metal wire disposed along each side of said tape is less than 1 mm.

In yet another exemplary embodiment, said substrate is of a roughly rectangular shape with an open front end and an open top.

According to another aspect of the present invention, a tape used in the aforesaid device for typing crabs is provided, in which said tape is made of cotton with width of about 2-6 cm and thickness of less than 1mm. A twistable metal wire is disposed along each side of said tape.

In a further aspect of this invention, a method of tying a crab is provided comprising the steps of:
a). providing a device of tying crabs as mentioned above;
b). inserting said tape with sufficient length vertically into said internal space;
c). placing a crab in said internal space and pushing the crab towards said tape; and
d). pulling said tape along the side of the crab and tightening the ends of said tape at the tail of the crab.

In an exemplary embodiment of the present invention, the device further comprises a fixing unit adjustably disposed within said substrate to adjust the size of said internal space for accommodating crabs with different sizes.

In another exemplary embodiment, said tape is made of cotton with thickness of less than 1mm, while the thickness of said metal wire disposed along each side of said tape is less than 1 mm.

In yet another exemplary embodiment, said substrate is of a roughly rectangular shape with an open front end and an open top.

In a further exemplary embodiment, said fixing unit comprises two lateral units and a back plate. Said lateral units are of similar height with that of said substrate and of a wedge shape, and said back plate is of equal width with that of said substrate. In an even further embodiment, said fixing unit further comprises a wedge-shaped pad.

In another aspect of the present invention, a tape for tying crabs is provided. The tape is made of flexible material and comprises a front strip adapted for wrapping the crawls of the crab, and at least a lateral strip adapted for tying the legs and body of the crab, wherein the two ends of said lateral strip fixedly connects with said front strip.

In one exemplary embodiment, said front strip is made of flexible material with cotton with width of 3-4cm and length determined according to the size of the crab; said lateral strip is made of flexible material with cotton with width of 0.6 cm; two said lateral strips connect with the two opposite sides of said front strip.

### BRIEF DESCRIPTION OF FIGURES

Fig. 1 shows the substrate of an embodiment of the present invention.
Fig. 2 shows the substrate and the fixing unit of the same embodiment of the present invention.
Fig. 3 illustrates the use of an embodiment of the present invention.
Fig. 4 illustrates the use of another embodiment of the present invention.
Fig. 5 illustrates the use of yet another embodiment of the present invention.

### DETAILED DESCRIPTION OF THE PREFERRED EMBODIMENTS

As used herein and in the claims, "comprising" means including the following elements but not excluding others.

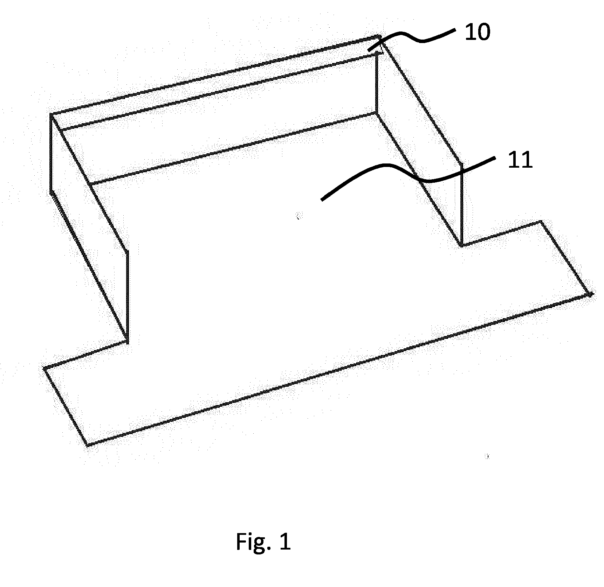

Referring now to Fig. 1, the first embodiment of the present invention is provided in which the device for tying crabs includes a substrate 10 and an internal space 11 is created within the substrate 10. The internal space 11 has an open front end and an open top with a size slightly larger than that of a crab to be placed therein.

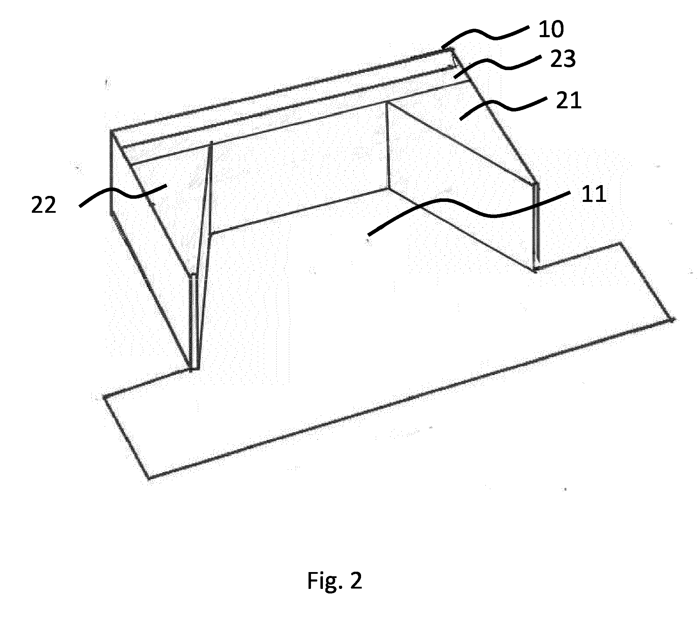

Fig. 2 illustrates a further embodiment of the present invention. The device further includes a fixing unit 20 (not shown in Fig. 2) that is adjustably disposed within the substrate 10. The fixing unit 20 includes two lateral units 21 and 22 and a back plate 23. The two lateral units 21 and 22 are wedge-shaped have the same height with that of the substrate 10. The back plate 23 is of equal width with that of the substrate 10.

The fixing unit 20 can be stably and adjustably disposed within the substrate 10 for accommodating crabs with different sizes. In one embodiment, the lateral units 21 and 22 can be further pushed against each other so as to reduce the size of the internal space 11 for accommodating crabs with smaller sizes.

In a preferred embodiment, the fixing unit 20 is made of flexible materials such as rubber or sponge. It would be conceived by one skilled in the art that the fixing unit 20 can be of other shapes and sizes, and that the fixing unit 20 can be further fixed within the internal space 11 by additional fixing means, such as padded fixer, or any other techniques well known in the skill of the art.

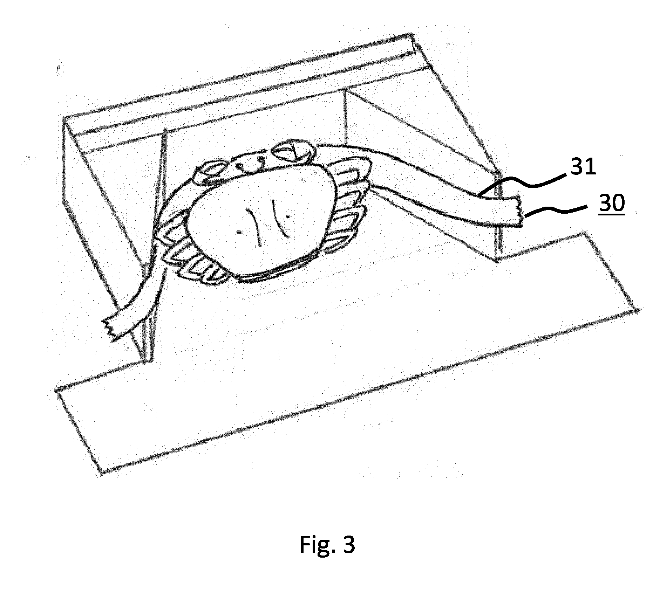

Fig. 3 illustrates the use of the embodiment of Fig. 2 in which tape 30 is shown. In a preferred embodiment of the present invention, the tape 30 is made of cotton with thickness of less than 1mm, and a twistable metal wire 31 can be disposed along each side of the tape 30; in a further preferred embodiment, the thickness of the metal wire disposed is less than 1 mm. The metal wire can be iron wire, or other metal wires that would not release harmful materials upon cooking and food processing. It would be conceived by one skilled in the art that the tape 30 of the present invention can be made of other materials, such as non-woven cloth, or other less absorbent artificial fiber materials.

In using the device, the substrate 10 and the fixing unit 20 are first set according to the size of the crab to be tied. A tape 30 with sufficient length is vertically inserted into the internal space 11. Then, the crab with folded legs is placed in the internal space 11 and pushed towards the tape 30 and back plate 23. Finally, the tape 30 is pulled along the side of the crab and the ends of the tape 30 are tightened at the tail of the crab.

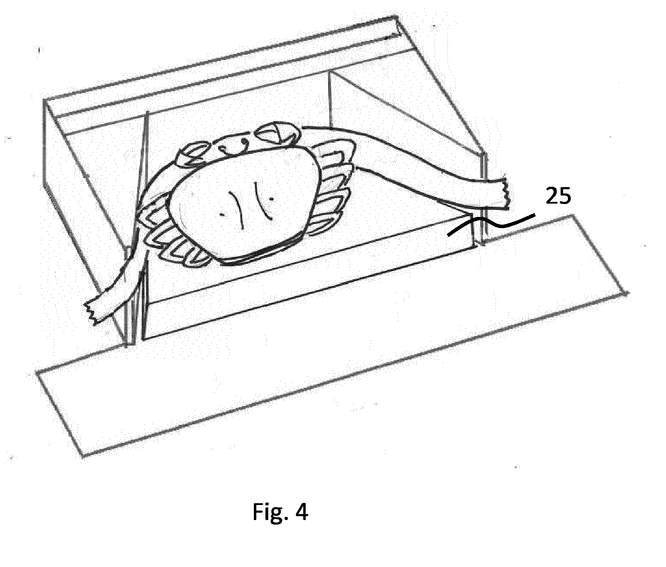

In a further preferred embodiment, the fixing unit 20 further includes a wedge-shaped pad 25 as shown in Fig. 4.The wedge-shaped pad 25 can be used to raise the tails of the crab during the tying process so as to facilitate the tightening of the ends of the tape 30.

Despite the lack of graphical illustration, one skilled in the art can further understand that the present invention can be used in the form of a kit. For example, a fixing accessory can be installed on either side or both sides of the substrate 10 for fixing the coil of the tapes and/or a pair of scissors for cutting the tapes onto the substrate 10.

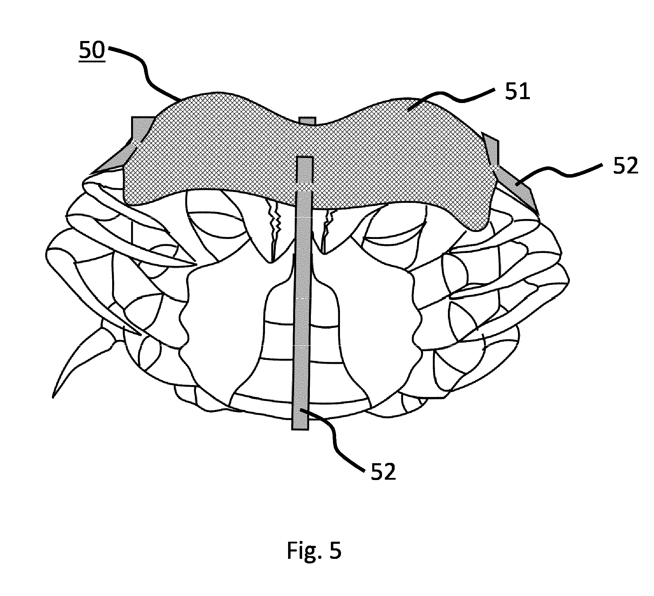

Fig. 5 illustrates another embodiment of the present invention in which a tape 50 is shown, which includes a front strip 51 and at least one lateral strip 52. The front strip 51 is of a roughly rectangular shape and used for wrapping the crawls of the crab, while the lateral strip 52 is used for tying the legs and body of the crab. The two ends of the lateral strip 52 can fixedly connect with the front strip 51. In a preferred embodiment, the front strip 51 is made of flexible material with cotton with width of 3-4cm and length of determined according to the size of the crab. In a preferred embodiment, the front strip 51 is made of flexible material with cotton; in a more preferred embodiment, the front strip 51 is made of 50% rubber and 50% cotton. In another preferred embodiment, the lateral strip 52 is made of flexible material with cotton with width of 0.6 cm, and is more preferably made of cotton. The two lateral strips respectively connect with the two opposite sides of said front strip. It would be conceived by one skilled in the art that the tape 50 can be made of other flexible materials; further, the sizes of the front strip and the lateral strip can be adjusted according to the size of the crab.

During use, the substrate 10 and the fixing unit 20 are first set according to the size of the crab to be tied. The front strip 51 with sufficient length is vertically inserted into the internal space 11. Then, the crab with folded legs is placed in the internal space 11 and pushed towards the front strip 51. Finally, the lateral strips 52 are flexibly pulled outwards and fixed onto the crab so as to tie the legs and body of the crab. It will be clear to one skilled in the art that the aforesaid tape 50 can be practiced independently without the use of the aforesaid device for tying crabs.

The exemplary embodiments of the present invention are thus fully described. Although the description referred to particular embodiments, it will be clear to one skilled in the art that the present invention may be practiced with variation of these specific details. Hence this invention should not be construed as limited to the embodiments set forth herein.

## Claims

1. A device for tying crabs comprising a tape and a substrate, wherein the width of said tape is about 2-6 cm, and a twistable metal wire is disposed along each side of said tape; said substrate comprises an internal space with an open front end and an open top; said internal space is adapted to have sufficient room to accommodate a crab placed therein.

2. The device of claim 1 further comprising a fixing unit adjustably disposed within said substrate to adjust the size of said internal space for accommodating crabs with different sizes.

3. The device of claim 1 or 2, wherein said tape is made of cotton with thickness of less than 1mm.

4. The device of any one of claims 1 to 3, wherein the thickness of said metal wire disposed along each side of said tape is less than 1 mm.

5. The device of any one of claims 1 to 4, wherein said substrate is of a roughly rectangular shape with an open front end and an open top.

6. The device of claim 2, wherein said fixing unit comprises two lateral units and a back plate; said lateral units are of similar height with that of said substrate and of a wedge shape; said back plate is of equal width with that of said substrate.

7. The device of claim 6, wherein said fixing unit further comprises a wedge-shaped pad.

8. The device of any one of claims 1 to 5, wherein the width of said tape is about 4 cm, and said internal space is of a roughly isosceles trapezoid shape having a size slightly larger than that of a crab placed therein.

9. A tape used in said device of claim 1, wherein said tape is made of cotton with width of about 2-6 cm and thickness of less than Imm; a twistable metal wire is disposed along each side of said tape.

10. The tape of claim 9, wherein the width and the thickness of said tape are about 4 cm and less than 1 mm, respectively; the thickness of said metal wire disposed along each side of said tape is less than 1 mm.

11. A method of tying a crab comprising the steps of:
a) providing a device of tying crabs of any one of claims 1 to 8;
b) inserting said tape with sufficient length vertically into said internal space;
c) placing a crab in said internal space and pushing the crab towards said tape; and
d) pulling said tape along the side of the crab and tightening the ends of said tape at the tail of the crab.

12. A tape for tying crabs made of flexible material comprising a front strip adapted for wrapping the crawls of the crab, and at least one lateral strip adapted for tying the legs and body of the crab, wherein the two ends of said lateral strip fixedly connects with said front strip.

13. The tape of claim 12, wherein said front strip is made of flexible material with cotton with width of 3-4cm and length determined according to the size of the crab; said lateral strip is made of flexible material with cotton with width of 0.6 cm; two said lateral strips connect with the two opposite sides of said front strip.
